# EUROPÄISCHE PATENTANMELDUNG

(11) **EP 1 416 086 A2**
(43) Veröffentlichungstag der Anmeldung: **06.05.2004**
(21) Anmeldenummer: 03023451.2
(22) Anmeldetag: 18.10.2003
(51) Int. Cl.: D21F 1/70, D21B 1/32

(54) **Verfahren und Vorrichtung zur Flotation von Störstoffen aus einer wässrigen Faserstoffsuspension**

(30) Priorität: 31.10.2002 DE 10250763
(71) Anmelder: Voith Paper Patent GmbH, 89522 Heidenheim (DE)
(72) Erfinder: Britz, Herbert, 88250 Weingarten (DE); Dreyer, Axel, 88212 Ravensburg (DE); Gommel, Axel, 88214 Ravensburg (DE); Hess, Harald, 88287 Grünkraut (DE); Kemper, Martin, 88250 Weingarten (DE); Kriebel, Almut, 88250 Weingarten (DE)

(57) **Zusammenfassung**

Das Verfahren dient zur Entfernung von Störstoffen mittels Flotation aus einer wässrigen Faserstoffsuspension (S), die einem Flotationsgefäß (4) zugeführt wird. Mit Hilfe von Gasblasen (1) wird ein Schaum (2, 3) gebildet, der die Störstoffe aufnimmt. Das durch Eindicken des Schaumes frei werdende Schwarzwasser wird mit Hilfe von Sammelelementen (5) aufgefangen und aus dem Schaum (2, 3) herausgeführt. In besonderen Ausführungsformen werden oben offene Rinnen verwendet, die als Sammelelemente (5) dienen, eventuell im Zusammenwirken mit darüber angeordneten streifenförmigen Lamellen. Auf diese Weise wird der Flotationseffekt verbessert, insbesondere da das Schwarzwasser (13) gesondert behandelt werden kann.

## Beschreibung

Die Erfindung betrifft ein Verfahren zur Flotation von Störstoffen aus einer wässrigen Faserstoffsuspension gemäß dem Oberbegriff des Anspruchs 1.

Verfahren der genannten Art werden verwendet, um aus einer wässrigen Faserstoffsuspension zumindest einen Teil der darin suspendierten Störstoffteilchen auszuscheiden. Bekanntlich wird bei einer Flotation ein die auszuscheidenden Stoffe enthaltender Schaum oder Schwimmschlamm gebildet. Ein typischer Anwendungsfall eines derartigen Verfahrens ist die Aufbereitung von einer aus bedrucktem Altpapier gewonnenen wässrigen Faserstoffsuspension, in der die Druckfarbenpartikel bereits von Fasern abgelöst sind, so dass sie sich ausflotieren lassen. Der hier beschriebene Flotationsvorgang nutzt die Unterschiede zwischen Faserstoff und unerwünschten Feststoffteilchen in der Art, dass der Faserstoff auf Grund seiner Hydrophilie in der Faserstoffsuspension verbleibt, während die angesprochenen Feststoffteilchen hydrophob sind und deshalb zusammen mit den Gasblasen in den Schaum gelangen. Neben den Druckfarbenpartikeln gibt es auch eine Vielzahl weiterer Stoffe, die hydrophob sind und sich daher durch Flotation von dem Faserstoff trennen lassen. Solche Stoffe sind insbesondere Kleber, feine Kunststoffpartikel und eventuell auch Harze. Wenn durch das Flotationsverfahren Fasern von Verunreinigungen getrennt, also nicht alle Feststoffpartikel aussortiert werden sollen, spricht man von selektiver Flotation. Der ebenfalls benutzte Begriff "Flotationsdeinking" wird in der Regel nicht nur für die Entfernung von Druckfarbenpartikeln (ink = Druckfarbe), sondern auch allgemeiner für die selektive Flotation von Verunreinigungen aus Faserstoffsuspensionen verwendet.

Der Stand der Technik bezüglich Flotationsverfahren für Faserstoffsuspensionen ist bereits sehr weit fortgeschritten. Daher gibt es Lösungen, welche durchaus geeignet sind, einen großen Teil der Feststoffpartikel durch Flotation zu entfernen. Da Flotationsanlagen relativ aufwändig in der Beschaffung und im Betrieb sind, ist es ein verständliches Ziel, deren Effekt zu verbessern oder den notwendigen Aufwand für das Erreichen desselben Ergebnisses zu reduzieren.

Aus der DE 197 33 059 ist ein Verfahren bekannt, bei dem die Flotation von Störstoffen so durchgeführt wird, dass eingedickter Flotationsschaum nach oben aus dem Flotationsgefäß abgesaugt wird.

Eine andere Publikation, die DE 199 05 439, zeigt eine Flotationszelle mit einer schräg nach oben gerichteten Entwässerungsstrecke zur Schaumabführung, die im Wesentlichen außerhalb des Bereiches liegt, in dem der Schaum von unten nachströmt. Dadurch legt der Schaum einen verlängerten Weg zurück, was zu einem hohen Eindickungsgrad führt. Das abfließende Schwarzwasser lässt sich leicht ableiten und so vom Schaum trennen. Diese Lösung ist aufwändig, und der Schaumabfluss wird manchmal etwas problematisch.

Ein Verfahren, bei dem die Zugabe der Faserstoffsuspension in den bereits gebildeten Schaum erfolgt, ist aus der DE 198 23 053 bekannt.

Der Erfindung liegt die Aufgabe zu Grunde, Flotationsverfahren dieser Art weiter zu verbessern, indem das Reinigungsergebnis auf relativ einfache Weise gesteigert wird, ohne dass die Betriebssicherheit leidet.

Diese Aufgabe wird durch die Merkmale des Anspruchs 1 in vollem Umfang gelöst.

Bei der stetigen Verdichtung, also Eindickung des Schaumes wird eine Flüssigkeit freigesetzt, die hier als Schwarzwasser bezeichnet wird. Das neue Verfahren ermöglicht eine Abführung dieses z.B. mit Druckfarben belasteten Schwarzwassers. So wird eine erneute Verschmutzung verhindert. Der gesamte Flotationsvorgang führt daher zu besseren Ergebnissen. Insbesondere Weißgrad und Schmutzpunktefreiheit werden verbessert. Das so aufgefangene Schwarzwasser kann separat abgezogen, geklärt und wiederverwendet werden.

Die Erfindung und ihre Vorteile werden erläutert an Hand von Zeichnungen. Dabei zeigen:
- Fig. 1: schematisch: Durchführung des erfindungsgemäßen Verfahrens mit einer Flotationszelle, bei der der eingedickte Flotationsschaum nach oben abgezogen wird;
- Fig. 2: eine Variante des erfindungsgemäßen Verfahrens mit Suspensionszugabe in den Schaum;
- Fig. 3: eine Variante mit Lamellen oberhalb der Sammelelemente;
- Fig. 4: eine Ansicht von oben auf eine geschnitten gezeichnete Flotationszelle;
- Fig. 5: schematisch: Eine Flotationsanlage mit fünf in Reihe geschalteten Flotationszellen;
- Fig. 6: eine Flotationszelle mit seitlicher Schaumabfuhr in Seitenansicht;
- Fig. 7: eine Flotationszelle mit seitlicher Schaumabfuhr in Ansicht von oben.

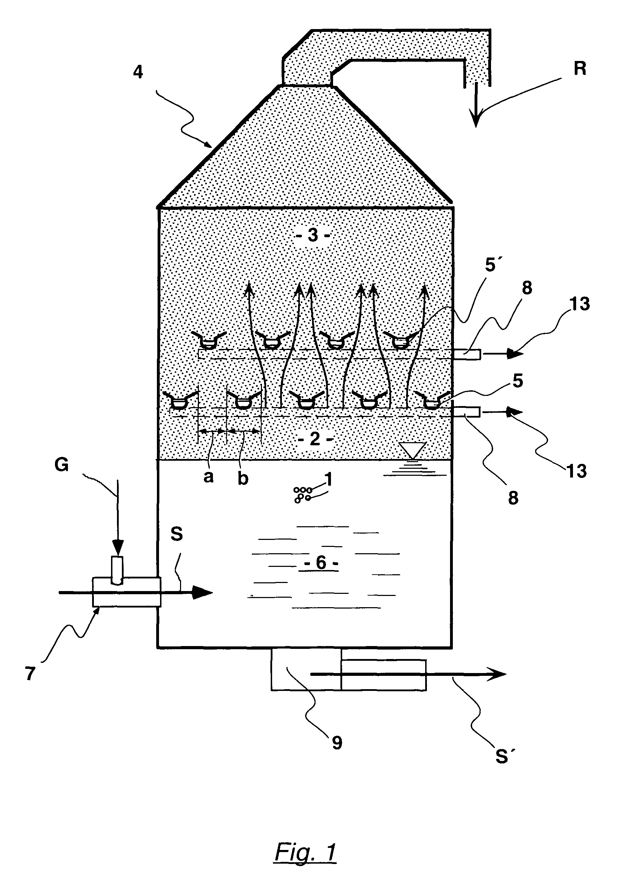

In Fig. 1 wird das Verfahren an Hand einer Flotationszelle beschrieben. Durch Zugabe von Gas G, hier durch einen Injektor 7, werden die Gasblasen 1, von denen nur wenige und diese übertrieben groß gezeichnet sind, gebildet, bevor die Faserstoffsuspension S in das Flotationsgefäß 4 eintritt. Sie steigen dann als Gasblasenstrom in der Flüssigkeitsschicht 6 entgegen dem anliegenden Schwerefeld auf. Grundsätzlich kann das anliegende Schwerefeld die Erdgravitation sein oder in entsprechend anderen Ausführungsformen durch Zentrifugalkräfte verstärkt werden. (In solchen Fällen bedeutet "oben" gleich "in Gegenrichtung zum Kraftfeld"). Die aufgestiegenen Gasblasen sammeln sich oberhalb der Flüssigkeitsschicht 6 im Schaum 2. Dieser ist an dieser Stelle noch relativ wässrig, weshalb sich die Grenzflächen der Blasen überwiegend kugelförmig ausbilden. Man spricht dann oft von Kugelschaum. Durch weitere Entwässerung dickt der Schaum weiter ein, bis die Grenzflächen der Blasen im Wesentlichen polyederförmig werden ("Polyeder-Schaum"). In der Praxis gibt es zwischen diesen Schaumarten keine scharfen Grenzen sondern Übergangsbereiche. Der eingedickte verschmutzte Schaum 3 wird über ein oben liegendes Schaumrohr als Rejekt R herausgedrückt. Oder der Schaum 3 wird abgesaugt. Andere Beispiele zur Schaumabfuhr werden noch erläutert.

Die hier dargestellte Flotationszelle weist eine Anzahl von rinnenförmigen Sammelelementen 5 auf, in denen das aus dem Schaum austretende Schwarzwasser 13 aufgefangen wird. Der seitliche Abstand a zum benachbarten Sammelelement 5 ist hier nicht größer als das Zweifache seiner Breite b. Dadurch bleibt genügend Platz für den von unten nachströmenden Schaum. Die Sammelelemente 5 können eine geringe Schrägstellung haben, so dass das Schwarzwasser 13 leichter in die Abführleitung 8 abfließen kann. Man sieht hier eine Anordnung in zwei übereinander liegenden Ebenen. Dabei sind die Sammelelemente 5' der oberen Ebene gegenüber den Sammelelementen 5 der unteren Ebene seitlich so versetzt, dass sie sich, in Schaumflussrichtung gesehen, überdecken. So wird ein großer Anteil des Schwarzwassers erfasst. Wenn das Schwarzwasser in unterschiedlicher Qualität gewonnen werden soll, z.B. mehr oder weniger verschmutzt, kann auch für jede Ebene eine eigene Abführleitung vorgesehen werden.

Nach erfolgter Reinigung sammelt sich die Faserstoffsuspension unten in der Flüssigkeitsschicht 6 und kann durch einen im Boden angeordneten Gutstoffauslass 9 als Gutstoff S' abgeführt werden.

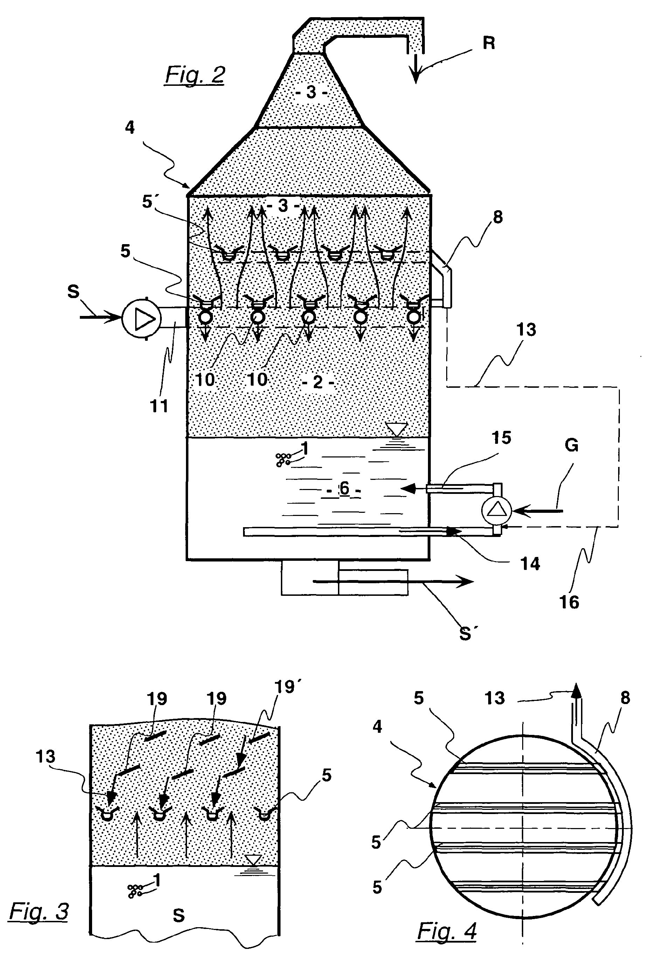

Die Fig. 2 zeigt eine weitere Variation, nämlich die Zuführung der zu flotierenden Faserstoffsuspension S direkt in den aufsteigenden Schaum 2. Dazu werden z.B. Zulaufrohre 10 verwendet, die an ihrer Unterseite mit Öffnungen versehen sind, um die Suspension gleichmäßig zu verteilen. Die Zulaufrohre 10 werden über ein oder mehrere Verteilrohre 11 gespeist, die innerhalb oder außerhalb des Flotationsgefäßes 4 liegen können. Zweckmäßigerweise liegen die Sammelelemente 5 und 5' oberhalb der Zulaufrohre 10. Es ist besonders vorteilhaft, Zulaufrohre 10 und Sammelelemente 5 so zusammen zu fassen, dass sie zumindest teilweise übereinander und parallel angeordnet sind. Dann ist der Widerstand, den sie dem aufsteigenden Schaum bieten, am geringsten. Dabei könnte z.B. eine Gitterstruktur gewählt werden. Solche Strukturen lassen sich auch leicht fertigen und montieren.

Auch bezüglich der Zufuhr von den zur Flotation benötigten Gasblasen wird in der Fig. 2 eine Variante gezeigt. Dabei wird in an sich bekannter Weise ein Teilstrom 14 der Suspension, z.B. unten aus der Flüssigkeitsschicht 6 abgesaugt, belüftet (Gas G) und an einer darüber liegenden Stelle als belüftete Suspension 15 wieder zugeführt. Diese Variante hat den Vorteil einer besonders guten und kontrollierbaren Vermischung der Faserstoffsuspension mit den Gasblasen. Bekanntlich ist die Gasmenge und die Gasblasenverteilung von großem Einfluss auf die Flotationswirkung. Darüber hinaus muss eine gewisse Energie übertragen werden, um die auszuflotierenden Partikel an die Gasblasen anlagern zu können. Auch diese Anforderung kann mit einem solchen separaten Belüftungskreislauf optimal erfüllt werden. Wird das Schwarzwasser 13 in den Belüftungskreislauf eingespeist (gestrichelte Linie 16), können die darin enthaltenen Störstoffe erneut flotiert werden.

Das Schwarzwasser kann auch dem Rejekt R zugeführt werden oder dem aus dem Rejekt im Zuge der nachfolgenden Entsorgung abgepressten Wasser. Wird die Flotation mehrstufig durchgeführt, indem der Rejekt R in die nachfolgende Stufe zufließt, kann auch in diese das Schwarzwasser zugegeben werden.

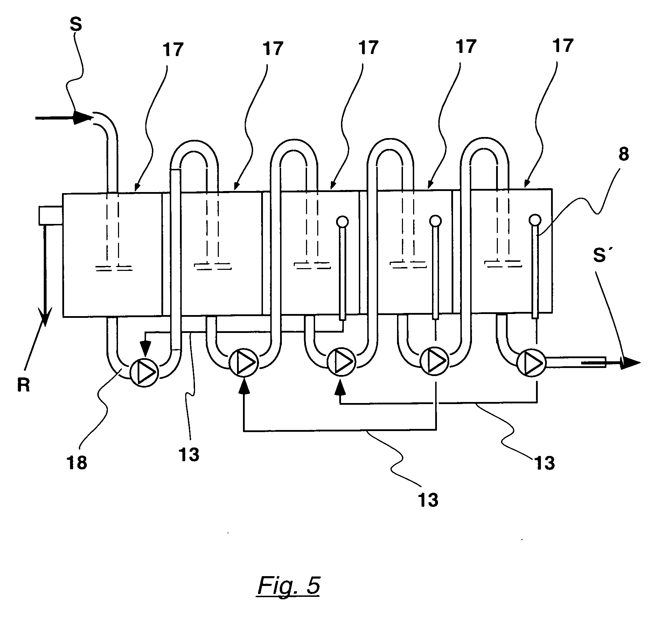

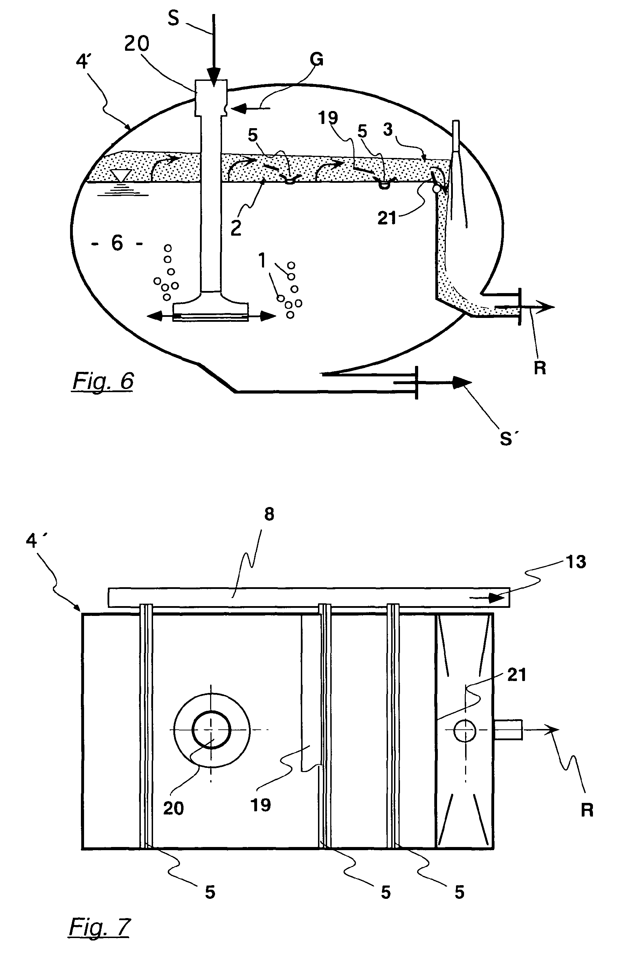

In Flotationsanlagen, bei denen mehrere Flotationszellen hintereinander geschaltet sind, bietet sich die Möglichkeit zu einer Schwarzwasser-Rückführung in eine stromaufwärtige Zelle. Hierzu zeigt Fig. 5 ein Beispiel mit fünf hintereinander von der Faserstoffsuspension durchströmten Flotationszellen 17. Zwischen den Flotationszellen 17 befinden sich Verbindungsleitungen 18 mit jeweils einer Pumpe, durch die die durch Flotation gereinigte Suspension in die nächste Flotationszelle geführt wird. In solchen Anlagen kann man die Ströme des Schwarzwassers 13, z.B. von den letzten drei Zellen in die jeweilige Verbindungsleitung 18 von dazu stromaufwärtigen Zellen einspeisen. Der Vorteil liegt darin, dass eine Rückführung des Schwarzwassers in weniger gereinigte Suspensionsströme erfolgt und damit die Anzahl von Flotationsvorgängen für die Störstoffe erhöht wird. Die Flotationszellen dieser Fig. 5 sind vom Typ der in den Fig. 6 und 7 gezeigten. Dabei ist anzumerken, dass die in Fig. 5 vorgeschlagene Schwarzwasserrückführung auch bei anderen Zellen, etwa denen gemäß Fig. 1 bis 4 mit Vorteil durchgeführt werden kann, wenn diese entsprechend geschaltet sind.

Bei Durchführung der erfindungsgemäßen Maßnahmen ist zumeist abzuwägen zwischen einer möglichst vollständigen Erfassung des vom Schaum abgegebenen Schwarzwassers und einer noch akzeptablen möglichen Behinderung des Schaumtransportes. Günstig ist es, die Sammelelemente 5 in mehreren Ebenen so übereinander anzuordnen, dass einerseits zwischen ihnen genügend Platz für den Schaum verbleibt und andererseits in Strömungsrichtung des Schwarzwassers eine möglichst gute Abdeckung durch Sammelemente vorhanden ist. Neben den in Fig. 1 und 2 gezeigten rinnenförmigen Sammelelementen 5 können, wie in Fig. 3 dargestellt, auch Kombinationen von Sammelelementen 5 und Lamellen 19 verwendet werden. Dabei dienen die Lamellen dazu, das aus dem Schaum austretende Wasser aufzufangen und in ein darunter liegendes Sammelelement 5 abfließen zu lassen. Man erkennt dort vier parallel liegende Sammelelemente 5 und in einer darüber liegenden Ebene exemplarisch drei parallel liegende Lamellen 19. Um eine bessere Überdeckung zu erreichen, können auch mehrere übereinander liegende Lamellen 19 und 19' verwendet werden, die so ausgerichtet sind, dass das Schwarzwasser von einer zur anderen und dann in ein Sammelelement 5 geführt wird. Geeignete Sammelelemente könnten dann auch am seitlichen Rand des Flotationsgefäßes 4 liegen.

Die Ansicht in Fig. 4 ist von oben auf eine geschnitten gezeichnete Flotationszelle mit eingebauten Sammelelementen 5, hier rinnenförmig, gerichtet. Die Sammelelemente 5 münden in eine außerhalb liegende Ringleitung. Diese dient als Abführleitung 8 für das Schwarzwasser 13.

Flotationsgefäße, bei denen der gebildete Schaum über eine längere Strecke vertikal nach oben geführt wird, wofür die Fig. 1 bis 4 Beispiele zeigen, sind sicherlich besonders geeignet, mit dem erfindungsgemäßen Verfahren eine besonders gute Reinigungswirkung zu erzielen. Bei solchen Verfahren findet nämlich erfahrungsgemäß eine besonders hohe Schaumverdichtung statt, die an sich erwünscht ist, da sich ein solcher Schaum leichter entsorgen lässt. Andererseits kann das bei bisher üblichen Verfahren zu den beschriebenen größeren Mengen von Schwarzwasser-Absonderungen in die Faserstoffsuspension führen. Es gibt aber auch eine große Anzahl von Flotationszellen, die mit einer seitlichen Schaumabfuhr arbeiten, was z.B. zu einem einfachen Aufbau einer solchen Flotationsanlage führen kann. Ein Beispiel dafür zeigt die Fig. 6, bei dem das Flotationsgefäß 4' einen eliptischen Querschnitt hat. Das Flotatonsgefäß 4' kann unter Umgebungsdruck betrieben werden. Auch bei solchen Flotationseinrichtungen besteht die Möglichkeit, das Verfahren nutzbringend anzuwenden. Die zu flotierende Faserstoffsuspension S wird über ein senkrecht stehendes Mischrohr 20, das in die Flüssigkeitsschicht 6 eintaucht, zugegeben und mit im Flotationsgefäß 4' frei werdendem Gas G vermischt. Solche Flotationszellen sind weithin bekannt. Der sich bildende Schaum 2 bzw. 3 (nach Eindickung) fließt über ein einstellbares Wehr 21 seitlich ab. Auch auf einem solchen Strömungsweg dickt sich der Schaum 2 ein und gibt Schwarzwasser 13 ab, das über die rinnenförmigen Sammelelemente 5 aufgefangen und seitlich abgeleitet werden kann. Die in Fig. 7 in Ansicht von oben gezeigte Flotationszelle ist ähnlich aufgebaut, und man erkennt hier die Abführleitung 8 für das in den Sammelelementen 5 erfasste Schwarzwasser 13. Form, Größe und Anzahl von Sammelelementen 5 bzw. damit zusammenwirkenden Lamellen 19 können leicht durch einfache Versuche optimiert werden. Wie bereits erwähnt, ist es auch hier wichtig, ein vernünftiges Maß zu finden, um einerseits das frei werdende Schwarzwasser möglichst vollständig zu erfassen und andererseits den Schaumtransport nicht wesentlich zu behindern.

Je nach Konstruktion und Aufbau des Flotationsgefäßes 4 ist es auch vorstellbar, dass der sich eindickende Schaum zumindest bereichsweise vertikal nach unten geführt wird. Auch in einem solchen Falle kann das beim Eindicken austretende Wasser durch ähnlich angeordnete Sammelelemente aufgefangen und aus dem Flotationsgefäß abgeführt werden.

## Patentansprüche

1. Verfahren zur Entfernung von Störstoffen aus einer wässrigen Faserstoffsuspension (S), bei dem
- die Faserstoffsuspension (S) in ein Flotationsgefäß (4, 4') zugegeben wird, so dass sie darin eine Flüssigkeitsschicht (6) bildet,
- im Flotationsgefäß (4, 4') mit Hilfe von Gasblasen (1) ein gegen das Schwerefeld aufsteigender Gasblasenstrom gebildet wird,
- die Störstoffe an die Gasblasen (1) angelagert und zusammen mit den Gasblasen (1) in einem Schaum (2, 3) nach oben geführt und mit dem Rejekt (R) aus dem Flotationsgefäß (4, 4') entfernt werden,
- die Faserstoffsuspension in gereinigter Form als Gutstoff (S') abgeführt wird,
**dadurch gekennzeichnet,**
**dass** das aus dem Schaum (2, 3) durch Eindickung des Schaumes frei werdende Schwarzwasser (13) mit Hilfe von Sammelelementen (5, 5') aufgefangen und aus dem Schaum (2, 3) herausgeführt wird, die vertikal über der im Flotationsgefäß (4, 4') gehaltenen Faserstoffsuspension (S) angeordnet sind.

2. Verfahren nach Anspruch 1,
**dadurch gekennzeichnet,**
**dass** als Sammelelemente (5, 5') nach oben offene Rinnen verwendet werden, die innerhalb des Schaumes (2, 3) positioniert sind.

3. Verfahren nach Anspruch 2,
**dadurch gekennzeichnet,**
**dass** die seitlichen Ränder der Rinnen vom Rand einer seitlich jeweils benachbarten Rinne einen Abstand (a) haben, der höchstens zwei Mal so groß ist wie die Breite (b) der Rinne.

4. Verfahren nach Anspruch 1, 2 oder 3,
**dadurch gekennzeichnet,**
**dass** die Sammelelemente (5, 5') in Gruppen angeordnet sind, die sich in verschiedenen Höhen über der Oberfläche der Faserstoffsuspension (S) befinden.

5. Verfahren nach einem der voranstehenden Ansprüche,
**dadurch gekennzeichnet,**
**dass** zumindest ein Teil der Sammelelemente (5) dort eingesetzt wird, wo sich der Schaum (3) bereits so weit verdichtet hat, dass die Gasblasen im Wesentlichen eine Polyederform haben.

6. Verfahren nach einem der voranstehenden Ansprüche,
**dadurch gekennzeichnet,**
**dass** zumindest ein Teil der Sammelelemente (5) dort eingesetzt wird, wo der Schaum (2) auf Grund der noch geringen Verdichtung aus im Wesentlichen kugelförmigen Gasblasen besteht.

7. Verfahren nach einem der voranstehenden Ansprüche,
**dadurch gekennzeichnet,**
**dass** das Schwarzwasser (13) an oberhalb der Sammelelemente (5) liegenden flachen Lamellen (19, 19') angesammelt wird,
wobei diese so angeordnet sind, dass das von ihnen ablaufende Schwarzwasser auf Grund der Schwerkraft direkt oder über weitere Lamellen (19, 19') in ein unterhalb liegendes Sammelelement (5) abläuft.

8. Verfahren nach Anspruch 7,
**dadurch gekennzeichnet,**
**dass** die Lamellen (19, 19') flache Leisten sind, die im Flotationsschaum (3) mit horizontaler Längserstreckung angeordnet sind.

9. Verfahren nach Anspruch 7 oder 8,
**dadurch gekennzeichnet,**
**dass** zumindest ein Teil der Lamellen (19, 19') dort eingesetzt wird, wo sich der Schaum (3) bereits so weit verdichtet hat, dass die Gasblasen im Wesentlichen eine Polyederform haben.

10. Verfahren nach Anspruch 7 oder 8,
**dadurch gekennzeichnet,**
**dass** zumindest ein Teil der Lamellen (19, 19') dort eingesetzt wird, wo der Schaum (2) auf Grund der noch geringen Verdichtung aus im Wesentlichen kugelförmigen Gasblasen besteht.

11. Verfahren nach einem der voranstehenden Ansprüche,
**dadurch gekennzeichnet,**
**dass** der Schaum (3) senkrecht nach oben aus dem Flotationsgefäß (4) ausgeleitet wird.

12. Verfahren nach einem der Ansprüche 1 bis 10,
**dadurch gekennzeichnet,**
**dass** der Schaum (3) in horizontaler Richtung aus dem Flotationsgefäß (4') ausgeleitet wird.

13. Verfahren nach einem der Ansprüche 1 bis 10,
**dadurch gekennzeichnet,**
**dass** der Schaum (3) nach unten aus dem Flotationsgefäß (4, 4') herausgeleitet wird.

14. Verfahren nach einem der voranstehenden Ansprüche,
**dadurch gekennzeichnet,**
**dass** die Gasblasen (1) in der sich unterhalb des Schaumes (2) befindenden Flüssigkeitsschicht (6) erzeugt werden.

15. Verfahren nach einem der Ansprüche 1 bis 13,
**dadurch gekennzeichnet,**
**dass** die Gasblasen (1) dadurch erzeugt werden, dass aus der sich unterhalb des Schaumes (2) befindenden Flüssigkeitsschicht (6) ein Teilstrom (14) abgepumpt, mit Gas (G) vermischt und an einer darüberliegenden Stelle wieder zugegeben wird.

16. Verfahren nach einem der voranstehenden Ansprüche,
**dadurch gekennzeichnet,**
**dass** die Gasblasen (1) im Wesentlichen Luftblasen sind.

17. Verfahren nach einem der voranstehenden Ansprüche,
**dadurch gekennzeichnet,**
**dass** die Faserstoffsuspension (S) direkt in den aufsteigenden Schaum (2) zugegeben wird.

18. Verfahren nach Anspruch 17,
**dadurch gekennzeichnet,**
**dass** die dem Schaum (2) zugegebene Faserstoffsuspension (S) vorher nicht mit Luft vermischt wird.

19. Verfahren nach Anspruch 17 oder 18,
**dadurch gekennzeichnet,**
**dass** die Sammelelemente (5, 5') und, falls vorhanden, die Lamellen (19, 19') oberhalb der Zugabestelle der Faserstoffsuspension angeordnet sind.

20. Verfahren nach einem der voranstehenden Ansprüche,
**dadurch gekennzeichnet,**
**dass** das Schwarzwasser (13) ohne weitere Reinigung in eine Flotationsapparatur zurückgeführt wird, die stromaufwärts zu der Flotationsapparatur geschaltet ist, aus der das Schwarzwasser (13) stammt.

21. Verfahren nach Anspruch 20,
**dadurch gekennzeichnet,**
**dass** das Flotationsverfahren in mehreren Flotationszellen (17) durchgeführt wird, die so geschaltet sind, dass der Gutstoff einer stromaufwärtigen Flotationszelle mittels einer Verbindungsleitung (18) in den Zulauf zur nächsten stromabwärtigen Flotationszelle geführt wird.

22. Verfahren nach einem der Ansprüche 1 bis 19,
**dadurch gekennzeichnet,**
**dass** das Flotationsverfahren in mehreren Stufen durchgeführt wird, bei denen der Rejekt einer stromaufwärtigen Stufe in den Zulauf zur nächsten stromabwärtigen Stufe geführt wird und dass das aus der stromaufwärtigen Stufe stammende Schwarzwasser in den Zulauf zur stromabwärtigen Stufe geführt wird.

23. Verfahren nach einem der Ansprüche 1 bis 19,
**dadurch gekennzeichnet,**
**dass** das Schwarzwasser (13) in einem speziellen Verfahrensschritt geklärt und wiederverwendet wird.

24. Verfahren nach einem der Ansprüche 1 bis 19,
**dadurch gekennzeichnet,**
**dass** das Schwarzwasser (13) in den Rejekt (R) geführt wird.

25. Verfahren nach einem der Ansprüche 1 bis 19,
**dadurch gekennzeichnet,**
**dass** der Rejekt (R) vor der Entsorgung entwässert und dass das Schwarzwasser (13) in das aus dem Rejekt (R) ausgepresste Wasser eingeleitet wird.
